# FASCICULE DE BREVET EUROPEEN

(11) **EP 0 837 543 B1**
(45) Date de publication et mention de la délivrance du brevet: **29.05.2002**
(21) Numéro de dépôt: 97402448.1
(22) Date de dépôt: 16.10.1997
(51) Int. Cl.: H02K 11/04, H01R 39/38

(54) **Dispositif d'assemblage mécanique et de liaison électrique de deux sous-ensembles d'un alternateur, notamment de véhicule automobile**
Vorrichtung zur mechanischen und elektrischen Verbindung von zwei Teilbaugruppen eines Kraftfahrzeugwechselstromgenerators
Device for mechanically and electrically joining two sub-assemblies of a motor vehicle generator

(30) Priorité: 16.10.1996 FR 9612609
(43) Date de publication de la demande: 22.04.1998
(73) Titulaire: VALEO EQUIPEMENTS ELECTRIQUES MOTEUR, 94000 Créteil (FR)
(72) Inventeur: Abadia, Roger, 93360 Neuilly/Plaisance (FR)
(74) Mandataire: Le Forestier, Eric

(56) Documents cités:
- FR-A- 2 629 287
- US-A- 5 268 605

## Description

La présente invention a trait d'une façon générale aux dispositifs d'assemblage mécanique et de connexion électrique simultanés entre deux sous-ensembles d'un alternateur, notamment d'un alternateur de véhicule automobile.

Elle vise plus particulièrement, mais non limitativement, l'assemblage mécanique et la connexion électrique entre un sous-ensemble de redressement et un sous-ensemble de régulation et de support de balais d'un tel alternateur.

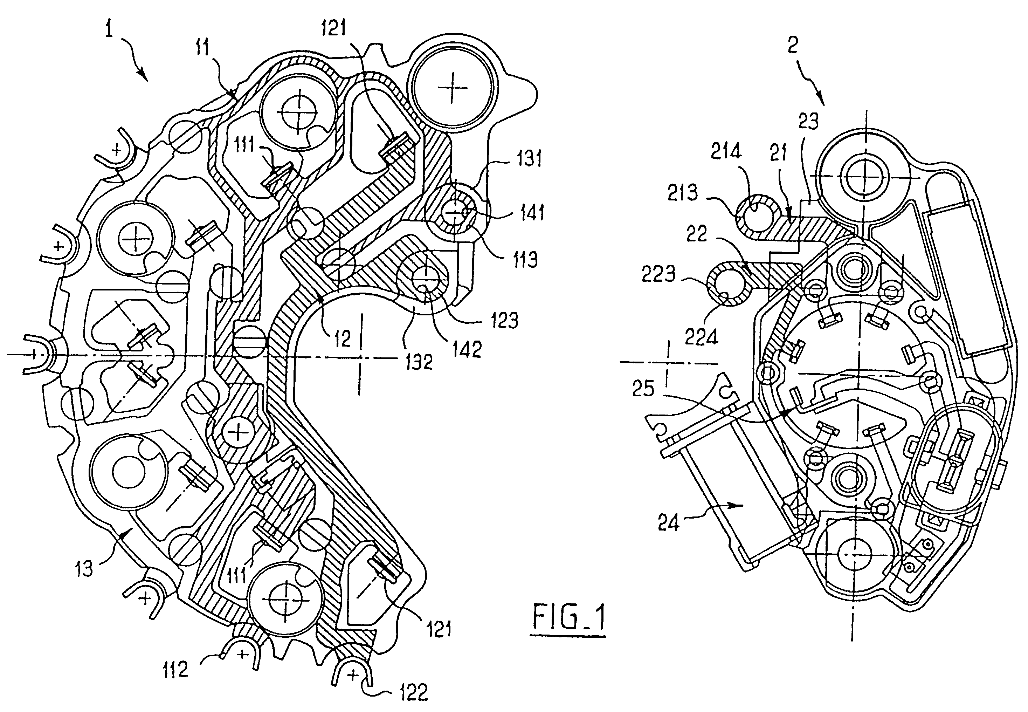

La figure 1 représente, en vue en plan éclatée, deux sous-ensembles connus de ce type.

Le sous-ensemble de redressement 1 est destiné à être relié mécaniquement et électriquement au sous-ensemble de régulation 2, la liaison électrique entre ces deux sous-ensembles véhiculant entre ses deux bornes la tension de sortie du pont redresseur (généralement de type triphasé).

Le sous-ensemble de redressement comporte classiquement un corps ou ossature en matériau isolant 13, une pluralité de diodes de redressement (non représentées), un connecteur positif 11 et un connecteur négatif 12 reliés aux différentes diodes.

Les connecteurs positif et négatif 11, 12 comportent, de façon classique, des aménagements de connexion aux diodes, désignés respectivement par 111, 121, et des aménagements de connexion aux conducteurs du stator, désignés respectivement par 112, 122.

En vue de l'assemblage mécanique et de la liaison électrique du sous-ensemble de redressement 1 avec le sous-ensemble de régulation 2, le connecteur positif 11 du sous-ensemble de redressement 1 possède une zone de connexion annulaire 113 prévu au niveau d'une zone d'assemblage 131 du corps isolant 13 dans laquelle est formée une ouverture circulaire 141. De même, le connecteur négatif 12 possède une zone de connexion annulaire 123 prévu au niveau d'une zone d'assemblage 132 du corps isolant 13 dans laquelle est formée une ouverture circulaire 142.

Par ailleurs, le sous-ensemble de régulation 2 comporte, de façon classique en soi, un corps isolant 23 sur lequel sont montés notamment un circuit intégré de régulation 25 et une paire de porte-balais 24. Ce sous-ensemble comporte un conducteur positif 21 relié au circuit intégré et comportant une zone annulaire 213 traversée par une ouverture 214, et un conducteur négatif 22 relié également au circuit intégré et comportant une zone annulaire 223 traversée par une ouverture 224.

Deux boulons (non représentés) sont prévus pour traverser respectivement les ouvertures 141, 214 et 142, 224 et, par coopération avec des taraudages appropriés formés par exemple dans le palier arrière de l'alternateur, pour presser ensemble les zones annulaires 113, 213 et 123, 223, respectivement, tout en assurant la fixation des deux sous-ensembles sur ledit palier.

Ainsi, pour assurer la double connexion électrique entre les sous-ensembles, il est nécessaire de prévoir deux points de boulonnage distincts et distants l'un de l'autre, alors que sur le strict plan mécanique, un seul point de boulonnage pourraît s'avérer suffisant.

Plus généralement, il est nécessaire de prévoir autant de points de fixation (boulons ou autres) que de connexions électriques à réaliser lors de l'assemblage.

Cette solution connue est bien entendu coûteuse, dans la mesure où elle nécessite plusieurs boulons et plusieurs taraudages ou écrous associés, et qu'elle allonge le temps nécessaire au montage.

Cette solution connue est également désavantageuse en ce que les contacts électriques réalisés entre les deux sous-ensembles, réalisés par simple pression entre elles de surfaces conductrices, sont exposés à l'environnement, avec un risque de corrosion et de détérioration de la qualité des contacts.

On connaît par ailleurs du document US-A-5 268 605 un dispositif d'assemblage mécanique et de liaison électrique entre deux sous-ensembles d'un alternateur, qui est conforme au préambule de la revendication 1 et qui permet, en un point de fixation unique (fixation réalisée par exemple par un boulon), d'assurer une pluralité de contacts électriques entre les deux sous-ensembles.

Ce dispositif connu est toutefois désavantageux en ce qu'il nécessite un empilage de contacts qui lui confère nécessairement une épaisseur importante dans le sens axial. En outre, les zones de contact sont largement exposées sur l'extérieur, et des risques de court-circuit peuvent apparaître notamment sous l'effet des intempéries.

L'objet de la présente invention est de proposer un dispositif d'assemblage mécanique et de liaison électrique du type précité, qui d'une part soit d'un encombrement, tant axial que transversal, limité, et qui d'autre part assure une bonne protection des surfaces à mettre en contact.

Ainsi la présente invention propose un dispositif d'assemblage mécanique et de liaison électrique entre deux sous-ensembles d'un alternateur tel que défini dans la revendication 1.

Des aspects préférés, mais non limitatifs, du dispositif selon l'invention sont exposés dans les revendications dépendantes 2 à 4.

L'invention propose également un alternateur, caractérisé en ce qu'il comporte des premier et second sous-ensemble assemblés mécaniquement et reliés électriquement à l'aide d'un dispositif tel que défini ci-dessus.

D'autres aspects, buts et avantages de la présente invention apparaîtront mieux à la lecture de la description détaillée suivante d'une forme de réalisation préférée de celle-ci, donnée à titre d'exemple et faite en référence au dessin annexé, sur lequel :
la figure 1 est une vue en plan éclatée d'un sous-ensemble de redressement et d'un sous-ensemble de régulation d'un alternateur selon l'état de la technique,
la figure 2 est une vue en plan éclatée d'un sous-ensemble de redressement et d'un sous-ensemble de régulation d'un alternateur selon la présente invention,
la figure 3 est une vue en plan d'un demi-carter d'alternateur dans lequel ont été assemblés et incorporés les deux sous ensembles de la figure 2,
la figure 4 est une vue en coupe transversale selon la ligne brisée IV-IV de la figure 3,
la figure 5 est une vue en coupe, selon la ligne V de la figure 4, d'une partie de fixation et de connexion de l'assemblage des figures 3 et 4,
la figure 6 est une vue en coupe selon la ligne VI d'une partie de fixation et de connexion de l'assemblage des figures 3 et 4, et
la figure 7 est une vue en perspective de la partie de fixation et de connexion de l'assemblage des figures 3 et 4.

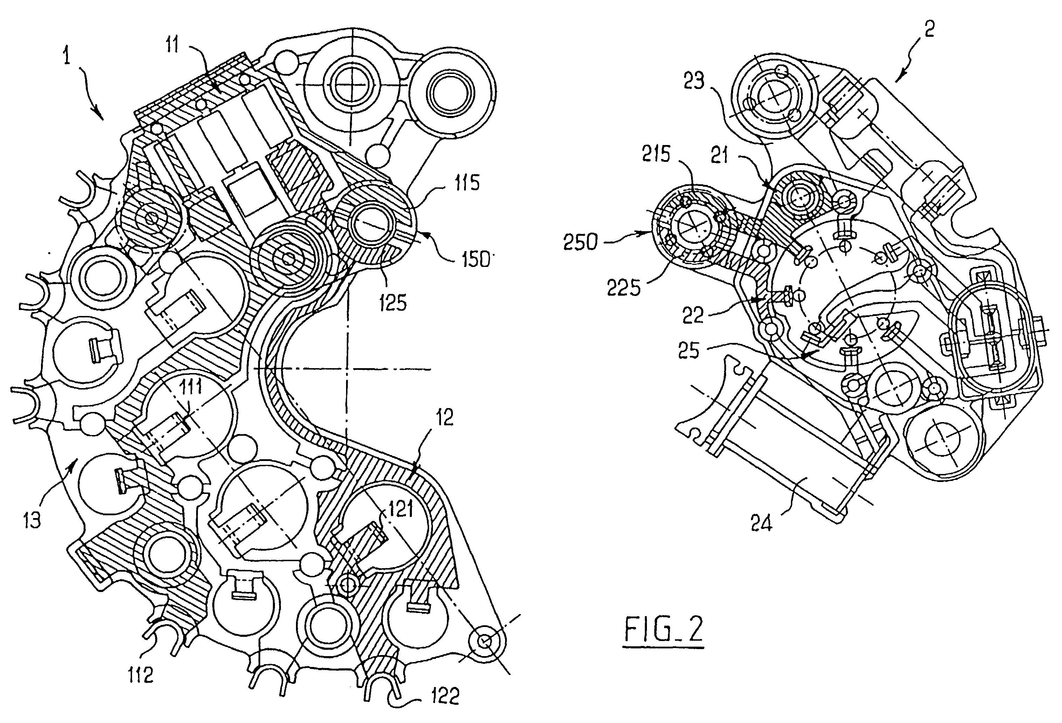

En référence maintenant aux figures 2 à 4, on a représenté deux sous-ensembles d'un alternateur de véhicule automobile, à savoir un sous-ensemble de redressement 1 et un sous ensemble de régulation 2.

Ces deux sous-ensembles ont été déjà décrits dans leur ensemble en préambule, les mêmes signes de référence étant utilisés pour les éléments communs. La description qui suit se limitera donc aux agencements spécifiques à la présente invention pour l'assemblage mécanique et la liaison électrique entre ces deux sous-ensembles.

Comme on l'observe sur la figure 2, le conducteur positif 11 du sous-ensemble de redressement 1 comporte une partie de connexion 115 en forme générale de demi-anneau, tandis que le conducteur négatif 12 comporte une partie de connexion 125 en forme générale de demi-anneau disposé symétriquement par rapport au demi-anneau 115, et face à celui-ci.

Ces deux parties de connexion 115, 125 sont reçues dans un aménagement approprié 150 du corps isolant 13 du sous-ensemble 1, tel qu'on le décrira plus loin.

De façon analogue, les conducteurs positif et négatif, respectivement 21 et 22, du sous-ensemble de régulation 2 comportent respectivement deux parties de connexion 215, 225 en forme générale de demi-anneaux disposés symétriquement et tournés l'un vers l'autre avec un certain espacement. Ces parties de connexion sont formées sur un aménagement particulier 250 du corps isolant 23 du sous-ensemble 2.

Les parties de contact 115, 125 ont sensiblement la même forme et les mêmes dimensions que les parties de contact 215, 225.

Maintenant en référence aux figures 5 à 7, on observe que l'aménagement 150 du sous-ensemble 1 est constitué principalement par deux jupes annulaires axiales concentriques, à savoir une jupe extérieure 151 et une jupe intérieure 152, lesquelles définissent une cavité annulaire 156 au fond de laquelle affleurent les deux parties de connexion 115, 125.

Par ailleurs, à partir du fond de la cavité 156 et entre les jupes 151, 152 s'étendent deux nervures radiales diamétralement opposées 153, 154 réalisées d'un seul tenant avec le reste de l'aménagement 150, et destinées à isoler l'une de l'autre les parties de contact 115, 125.

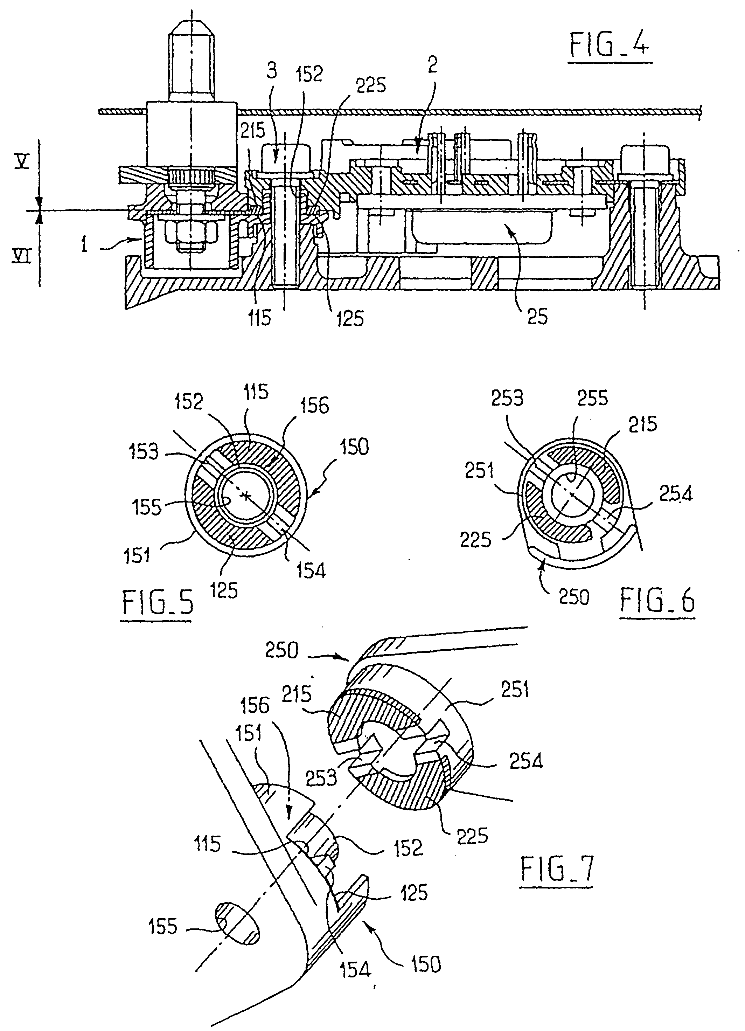

On observera ici, comme l'illustre en particulier la figure 7, que la jupe extérieure 151 de l'aménagement 150 peut être éventuellement interrompue au niveau des nervures 153, 154.

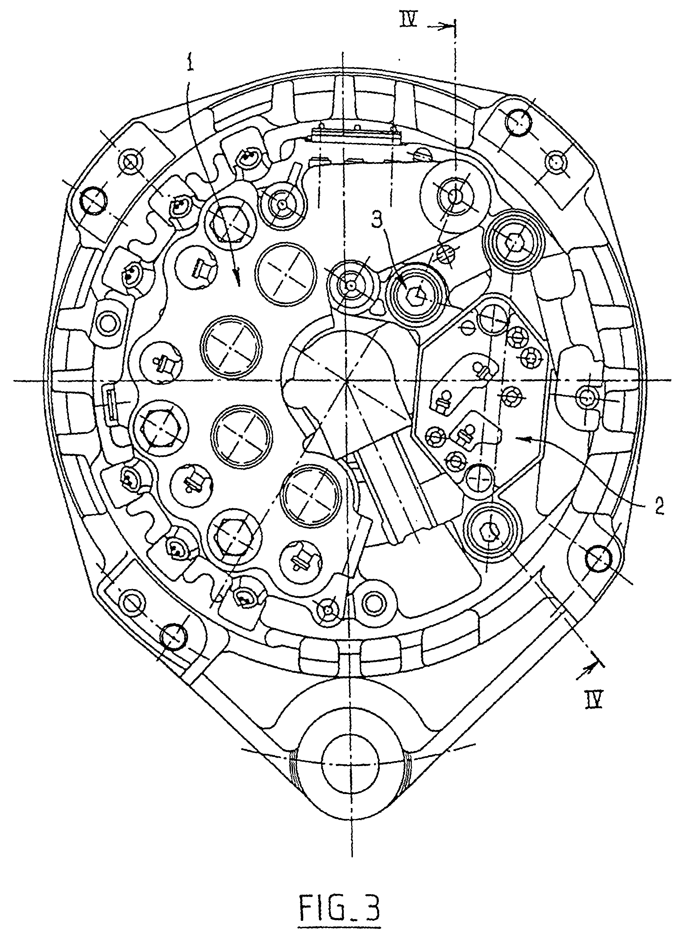

Enfin l'aménagement 150 est traversé centralement par une ouverture cylindrique 155 coaxiale avec les jupes 151, 152 et destinée à recevoir la tige d'un boulon de fixation unique (référencé 3 sur les figures 3 et 4).

L'aménagement 250 formé sur le corps isolant du sous-ensemble 2 comprend une bague annulaire saillante 251 à la surface d'extrémité axiale de laquelle affleurent les deux parties de contact 215, 225 des conducteurs 21, 22.

Cette bague 251 présente une forme complémentaire de celle de la cavité 156 définie sur l'aménagement 150 du premier sous-ensemble 1. Elle présente à cet égard deux gorges 253, 254 qui s'étendent radialement, qui sont diamétralement opposées et qui séparent l'une de l'autre les deux parties de connexion 215, 225.

Cet aménagement 250 est traversé par une ouverture cylindrique axiale 255 d'un diamètre de préférence voisin de celui de l'ouverture 155.

Lorsque les deux sous-ensembles doivent être rapportés sur le palier arrière de l'alternateur, les aménagements de fixation 150, 250 des deux sous-ensembles sont emboîtés l'un dans l'autre, avec coopération de type mâle/femelle, de telle sorte que les parties de contact 115, 125 du premier sous-ensemble viennent respectivement au droit des parties de contact 215, 225 du second sous-ensemble. Au cours de cet emboîtement, les nervures 153, 154 pénètrent dans les gorges 253, 254 pour assurer une séparation effective des demi-cavités dans lesquelles les contacts sont respectivement établis.

Le boulon 3 étant alors introduit dans les ouvertures alignées 155, 255, il est vissé dans un trou taraudé formé dans le palier arrière de l'alternateur, ce qui provoque le serrage réciproque des deux aménagements 150, 250 et établit un contact approprié entre les parties de connexion respective 115, 215 et 125, 225.

A l'issue de ce serrage, les contacts sont protégés vis-à-vis de l'environnement extérieur notamment par la jupe extérieure 151 qui définit des cavités de contact fermées ou essentiellement fermées. Le cas échéant, on peut incorporer dans ces cavités de la graisse pour améliorer la protection des contacts.

Ainsi l'invention permet, à l'aide d'un élément de fixation unique, en l'occurrence le boulon 3, de fixer les deux sous-ensembles tout en assurant une pluralité de contacts électriques entre ces deux sous-ensembles.

Naturellement, l'homme du métier saura effectuer les adaptations nécessaires pour réaliser au niveau de cette fixation unique un nombre de contacts supérieur à deux.

On notera ici que les corps isolants des deux sous-ensembles sont avantageusement réalisés par surmoulage sur leurs conducteurs respectifs.

Bien entendu, la présente invention n'est nullement limitée à la liaison mécanique et électrique d'un sous-ensemble de redressement et d'un sous-ensemble de régulation, mais peut être utilisée avec tous autres composants d'un alternateur.

## Revendications

1. Dispositif d'assemblage mécanique et de liaison électrique entre deux sous-ensembles (1, 2) d'un alternateur, notamment d'un alternateur de véhicule automobile, l'un des sous-ensembles (1) comportant au moins deux premiers éléments conducteurs (11, 12) fixés sur un support (13) et l'autre sous ensemble comportant au moins deux seconds éléments conducteurs (21, 22) montés sur un support (23) et destinés à être reliés aux premiers éléments conducteurs, et les supports des premier et second sous-ensembles comportant des aménagements (150, 250) destinés à coopérer avec des moyens d'assemblage (3) à serrage, lesdits moyens d'assemblage étant aptes à maintenir une pression de contact entre des parties de connexion homologues (115, 125; 215, 225) des premiers éléments conducteurs et des seconds éléments conducteurs, et les parties de connexion (115, 125; 215, 225) des premiers et seconds éléments conducteurs étant prévues au voisinage les unes des autres sur des aménagements respectifs (150, 250) aptes à recevoir un organe d'assemblage unique (3), **dispositif caractérisé en ce que** lesdites parties de connexion homologues des premiers éléments conducteurs et des seconds éléments conducteurs sont dans leur ensemble répartis autour dudit organe d'assemblage (3), **en ce que** lesdits aménagements sont des aménagements mâle-femelle (250; 150) définissant au moins deux cavités de contact réparties autour dudit organe d'assemblage et comportant deux faces en vis-à-vis sur lesquelles sont situées lesdites parties de connexion, et **en ce que** l'une des faces comporte des saillies (153, 154) séparant les parties de connexion des éléments conducteurs (115, 125) du sous-ensemble considéré (1) et l'autre face comporte des renfoncements (253, 254) homologues desdites saillies, séparant les parties de connexion (215, 225) des éléments conducteurs de l'autre sous-ensemble (2).

2. Dispositif selon la revendication 1, **caractérisé en ce que** lesdites parties de connexion (115, 125; 215, 225) et lesdites cavités de contact présentent la forme de parties d'anneaux concentriques.

3. Dispositif selon l'une des revendications 1 et 2, **caractérisé en ce que** l'aménagement femelle comporte une jupe intérieure (152) entourant ladite ouverture traversante (155) et une jupe extérieure (151) située à distance de la jupe intérieure et délimitant avec elle lesdites cavités.

4. Dispositif selon l'une des revendications 1 à 3, **caractérisé en ce que** le premier sous-ensemble (1) est un sous-ensemble de redressement de l'alternateur et **en ce que** le second sous-ensemble (2) est un sous-ensemble de régulation et de support de balais de l'alternateur.

5. Alternateur, **caractérisé en ce qu'**il comporte des premier et second sous-ensembles (1, 2) assemblés mécaniquement et reliés électriquement à l'aide d'un dispositif selon l'une des revendications 1 à 4.

## Claims

1. A device for mechanically and electrically joining together two sub-assemblies (1, 2) of an alternator, in particular a motor vehicle alternator, one of the sub-assemblies (1) comprising at least two first conductor elements (11, 12) fixed on a support (13), and the other sub-assembly comprising at least two second conductor elements (21, 22) mounted on a support (23) and arranged to be connected to the first conductor elements, and the supports for the first and second sub-assemblies comprising-guide means (150, 250) arranged to cooperate with tightenable assembly means (3), the said assembly means being adapted to maintain contact pressure between homologous connecting portions (115, 125; 215, 225) of the first conductor elements and second conductor elements, and the connecting portions (115, 125; 215, 225) of the first and second conductor elements being disposed close to each other on respective guide means (150, 250) adapted to receive a single assembly member (3), the device being **characterised in that** the said homologous connecting portions of the first conductor elements and second conductor elements are together distributed around the said assembly member (3), **in that** the said guide means are male and female guide means (150, 250) defining at least two contact cavities, which are spaced apart around the said assembly member and have two faces in facing relationship with each other on which the said connecting portions are situated, and **in that** one of the faces has projecting elements (153, 154) separating the connecting portions of the conductor elements (115, 125) of the sub-assembly concerned (1), and the other face has recesses homologous with the said projecting elements and separating the connecting portions (215, 225) of the conductor elements in the other sub-assembly (2).

2. A device according to Claim 1, **characterised in that** the said connecting portions (115, 125; 215, 225) and the said contact cavities are in the form of portions of concentric annular rings.

3. A device according to Claim 1 or Claim 2, **characterised in that** the female guide means includes an internal skirt (152) surrounding the said through aperture (155), and an external skirt remote from the internal skirt and, with it, defining the said cavities.

4. A device according to one of Claims 1 to 3, **characterised in that** the first sub-assembly (1) is a rectifier sub-assembly of the alternator, and **in that** the second sub-assembly (2) is a regulator and brush-carrying sub-assembly of the alternator.

5. An alternator, **characterised in that** it comprises first and second sub-assemblies (1, 2) assembled mechanically together and connected electrically together by means of a device according to one of Claims 1 to 4.

## Patentansprüche

1. Vorrichtung für den mechanischen Zusammenbau und die elektrische Verbindung zwischen zwei Teilbaugruppen (1, 2) eines Wechselstromgenerators, insbesondere eines Kraftfahrzeugwechselstromgenerators, wobei eine der Teilbaugruppen (1) wenigstens zwei an einem Träger (13) befestigte erste Leiterelemente (11, 12) umfaßt und die andere Teilbaugruppe wenigstens zwei zweite Leiterelemente (21, 22) umfaßt, die an einem Träger (23) angebracht und dazu bestimmt sind, mit den ersten Leiterelementen verbunden zu werden, und wobei die Träger der ersten und zweiten Teilbaugruppen Anordnungen (150, 250) umfassen, die dazu bestimmt sind, mit Einspann-Zusammenbaumitteln (3) zusammenzuwirken, wobei die besagten Zusammenbaumittel einen Kontaktdruck zwischen einander entsprechenden Anschlußteilen (115, 125; 215, 225) der ersten Leiterelemente und der zweiten Leiterelemente aufrechterhalten können, und wobei die Anschlußteile (115, 125; 215, 225) der ersten und zweiten Leiterelemente nahe beieinander an zugehörigen Anordnungen (150, 250) vorgesehen sind, die ein einziges Zusammenbauorgan (3) aufnehmen können, **dadurch gekennzeichnet, daß** die besagten einander entsprechenden Anschlußteile der ersten Leiterelemente und der zweiten Leiterelemente insgesamt um das besagte Zusammenbauorgan (3) herum verteilt sind, daß die besagten Anordnungen Steckverbindungsanordnungen (25; 150) sind, die wenigstens zwei Kontaktaufnahmen bilden, die um das besagte Zusammenbauorgan herum verteilt sind und zwei gegenüberliegende Flächen umfassen, auf denen sich die besagten Anschlußteile befinden, und daß eine der Flächen Vorsprünge (153, 154) umfaßt, die die Anschlußteile der Leiterelemente (115, 125) der betreffenden Teilbaugruppe (1) trennen, und die andere Fläche den besagten Vorsprüngen entsprechende Ausnehmungen (253, 254) umfaßt, die die Anschlußteile (215, 225) der Leiterelemente der andere Teilbaugruppe (2) trennen.

2. Vorrichtung nach Anspruch 1, **dadurch gekennzeichnet, daß** die besagten Anschlußteile (115, 125; 215, 225) und die besagten Kontaktaufnahmen die Form von konzentrischen Ringteilen aufweisen.

3. Vorrichtung nach einem der Ansprüche 1 und 2, **dadurch gekennzeichnet, daß** die Aufnahmeanordnung eine innere Einfassung (152), die die besagte durchgehende Öffnung (155) umgibt, und eine äußere Einfassung (151) umfaßt, die sich in einem Abstand von der inneren Einfassung befindet und zusammen mit ihr die besagten Aufnahmen begrenzt.

4. Vorrichtung nach einem der Ansprüche 1 bis 3, **dadurch gekennzeichnet, daß** die erste Teilbaugruppe (1) eine Gleichrichter-Teilbaugruppe des Wechselstromgenerators ist und daß die zweite Teilbaugruppe (2) eine Regler- und Bürstenhalter-Teilbaugruppe des Wechselstromgenerators ist.

5. Wechselstromgenerator, **dadurch gekennzeichnet, daß** er erste und zweite Teilbaugruppen (1, 2) umfaßt, die mit Hilfe einer Vorrichtung nach einem der Ansprüche 1 bis 4 mechanisch zusammengebaut und elektrisch verbunden sind.
